# EUROPEAN PATENT APPLICATION

(11) **EP 0 577 411 A2**
(43) Date of publication of application: **05.01.1994**
(21) Application number: 93305122.9
(22) Date of filing: 30.06.1993
(51) Int. Cl.: H04N 7/00

(54) **Error detection circuit**

(30) Priority: 30.06.1992 KR 1150092
(71) Applicant: SAMSUNG ELECTRONICS CO., LTD., Suwon-city, Kyungki-do 441-373 (KR)
(72) Inventor: Han, Hong Soo, Suwon-city, Kyungkido (KR)
(74) Representative: Read, Matthew Charles

(57) **Abstract**

An input data signal header is compared, in parallel, by a plurality of comparing means (100, 200, 300, 400) with respective predetermined bit patterns. If more than a preset number of mismatches occur during each comparison, the relevant comparing means (100, 200, 300, 400) outputs an error detect signal. If all the comparing means output an error detect signal, a gate circuit (2000) blocks the transfer of the input data signal therethrough.

## Description

The present invention relates to an error detection circuit and has particular, though not exclusive, application to error detection of zero packet data in the D2 MAC broadcast television system.

In the D2 MAC broadcast system, the horizontal scan period of one frame is 64µs. 11µs out of the 64µs is used for a digital data block that contains audio data and teletext data for the current frame, and the rest (53µs) is used for luminance and chrominance video data. The digital data block is transmitted in the form of packets which contain 751 bits each. There are 625 scan lines each consisting of 99 bits, and one frame consists of 82 data packet.

Out of the 751 bits in one packet, the first 23 bits are used as a packet header. The packet header is used to inform the decoder about the contents of the packet data following the packet header, and all digital data belongs to a certain packet header.

In general, the structure of a packet is as shown in table 1.

**Table 1**

| packet header (23 bit) | | | effective data (728 bit) | |
|---|---|---|---|---|
| continuous | | | | |
| address | index | suffix | packet type | data |
| 10 bit | 2 bit | 11 bit | 8 bit | 720 bit |

In table 1, the packet header (23 bits) consists of a 10-bit address, a 2-bit continuous index and a 11-bit protection suffix. The packet header is used by the decoder for checking whether a data stream belongs to the current packet (for example, program service), and for detecting the loss of packets, if any, due to noise.

The address of a packet header shows the same bit pattern for a given type of data (for example, hi-fi mono sound, medium fidelity sound, etc.); the continuous index contains the binary index values of 00,01,10, or 11 to show the order among the packets having the same address, which allows the decoder to detect the loss of packets by checking if the continuous index continues without disruption, for each service.

Since the address has 10 bits, it can indicate up to 2¹⁰ =1024 address codes, of which two address codes are dedicated to special purposes.

They are the address codes "0" (where all ten bits are "0") and "1023" (where all ten bits are "1").

The packet whose address code is "0", i.e., all bits are "0", is called "zero packet data". The zero packet data is used to provide the decoder with the service and information about non-zero packet data, for the channel currently being broadcast. This is also called the Service Identification Channel.

The 11-bit protection suffix is a code derived from the 10-bit address header and the 2-bit continuous index of the packet header. For zero packet data, the address is fixed (0000000000), so four suffix codes are possible depending on the value of the continuous index, as shown in table 2.

An error correction code (ECC) known as "Golay code" is used for each packet header to allow correction of errors of up to 3 bits.

**Table 2.**

| address | continuous index | protection suffix |
|---|---|---|
| 0000000000 | 00 | 00000000000 |
| 0000000000 | 01 | 10001110101 |
| 0000000000 | 10 | 10010011111 |
| 0000000000 | 11 | 00011101010 |

That is, the 751-bit data in a packet is serially input and the first 23-bits belonging to the header are converted to a parallel data.

The parallel converted data is used to generate a "syndrome" which is input to the ROM at the address where typical error patterns are stored. If the ROM circuit judges that the syndrome does not match any error pattern, there is no need for additional manipulation. But if the ROM circuit judges that the syndrome matches a pre-stored error pattern, it outputs the locations of the error bits and performs exclusive-OR operation on them with the data input, for correcting the errors.

Further, US-A-4873689 (hereinafter referred to as the "cited reference") discloses an invention for error detection and correction of digital data being received with normal television signals, comprising: a shift register for calculating syndromes; a return provided at the shift register ports corresponding to the generation polynomials output from the output ports of the shift register; a memory for calculating the syndrome of the corrected code; a device attached to the memory, for storing each word corresponding to the columns of the matrix for generating redundancy from the message and for sequentially adding the words to the contents of the shift register. The cited reference has an advantage of thoroughly checking any and all correctable errors, and of keeping the memory safe during high speed operation.

However, although the error correction in the cited reference would be advantageous when the source data consisting of address and continuous index is random, it has the problem of requiring an unnecessarily large number of components and complex circuitry, if the error detection is to be done only on the zero packet data having address codes "0".

The present invention is intended to solve the above-described problem, more specifically to provide an error detection circuit suitable for zero packet data with easier error detection and simpler circuitry.

According to the present invention, there is provided an error detection circuit, comprising: comparing means for comparing an input data signal with each of a plurality of predetermined bit patterns; and error detect signal generating means responsive to the comparing means for generating an error detect signal if each of the predermined bit patterns differ from the input data signal by more than a predetermined number of bits.

Preferably, the circuit includes means to separate a header portion from a data packet, comprising a header portion and an information portion, and gate means responsive to the error detect signal to block transfer of said information portion therethrough, wherein said input data signal comprises said header portion.

Preferably, the comparing means comprises a plurality of comparators, operating in parallel for comparing the input data signal with respective ones of said predetermined bit patterns.

Preferably, the predetermined bit patterns are generated by respective shift register each comparison. Conveniently, there are four predetermined bit patterns.

In a preferred embodiment, applicable to D2 MAC, the predetermined bit patterns are D2 MAC zero packet headers having respective continuous indices of "00", "01", "10" and "11".

An embodiment of the present invention will now be described, by way of example, with reference to the accompanying drawings, in which:
Figure 1 is a block diagram of a preferred embodiment of the error detection circuit for zero packet data according to the present invention;
Figure 2 is a detailed circuit diagram of the first error detector according to Figure 1;
Figure 3 is a detailed circuit diagram of the second error detector according to Figure 1;
Figure 4 is a detailed circuit diagram of the third error detector according to Figure 1;
Figure 5 is a detailed circuit diagram of the fourth error detector according to Figure 1; and
Figure 6 is a waveform diagram showing operation of each component of the error detection circuit for zero packet data according to the present invention.

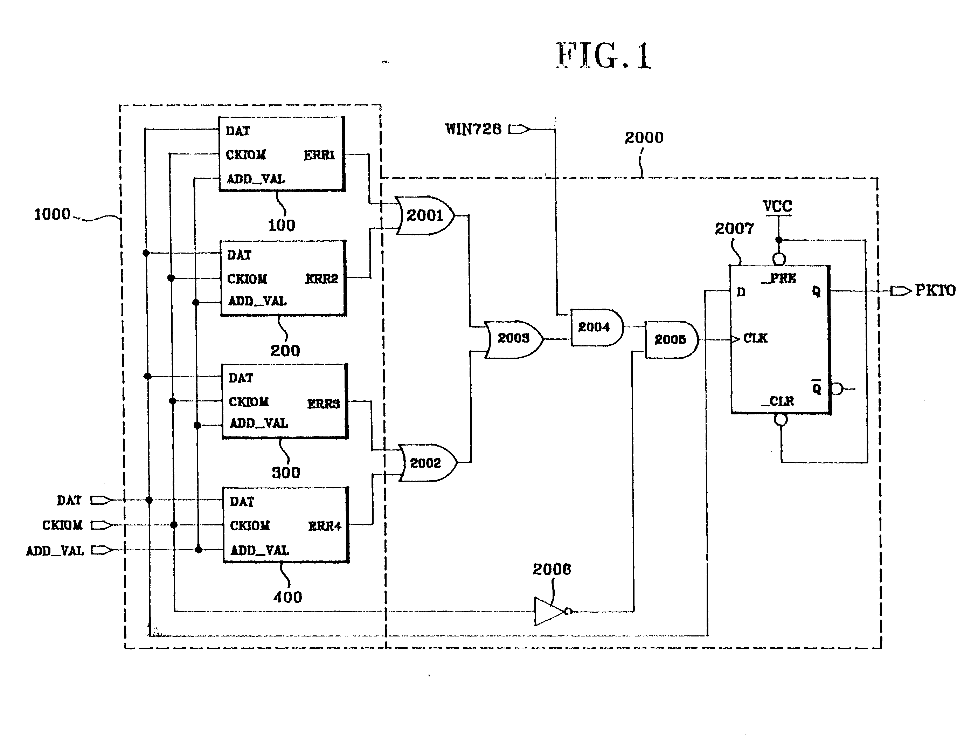

Figure 1 is a block diagram of a embodiment of an error detection circuit according to the present invention, comprising an error detector section 1000 for zero packet data and a data output circuit 2000 for prohibiting output of packet data if an error is detected.

The error detector section 1000 comprises a first error detector 100 for error detection for zero packet data having continuous index 00, a second error detector 200 for error detection for zero packet data having continuous index 01, a third error detector 300 for error detection for zero packet data having continuous index 10, and a fourth error detector 400 for error detection for zero packet data having continuous index 11.

The data output circuit 2000 comprises a first 2-input OR gate 2001 connected to the output stages of the first error detector 100 and the second error detector 200, a second 2-input OR gate 2002 connected to the output stages of the third error detector 300 and the fourth error detector 400, a third 2-input OR gate 2003 connected to the output stages of the first and second OR gates 2001, 2002, a first 2-input AND gate 2004 connected to the output stage of the third OR gate 2003 and the signal output stage WIN728 which ouputs logic "high" signal during the period of the 728 bits of the effective data shown in table 1, a second 2-input AND gate 2005 connected to the main clock input CK10M and the output stage of the first AND gate 2004 through an inverter 2006, and D flip-flop 2007 of which the clock input is connected to the output stage of the second AND gate 2005 and the D-input is connected to the packet data output stages DAT of the four error detectors 100, 200, 300 and 400.

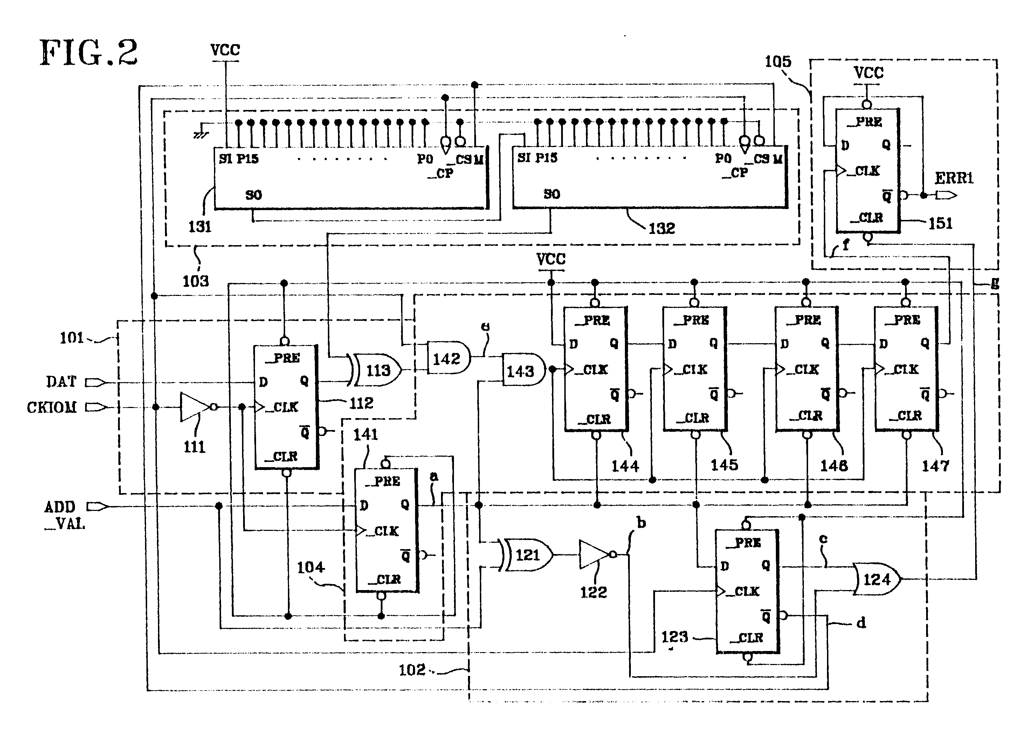

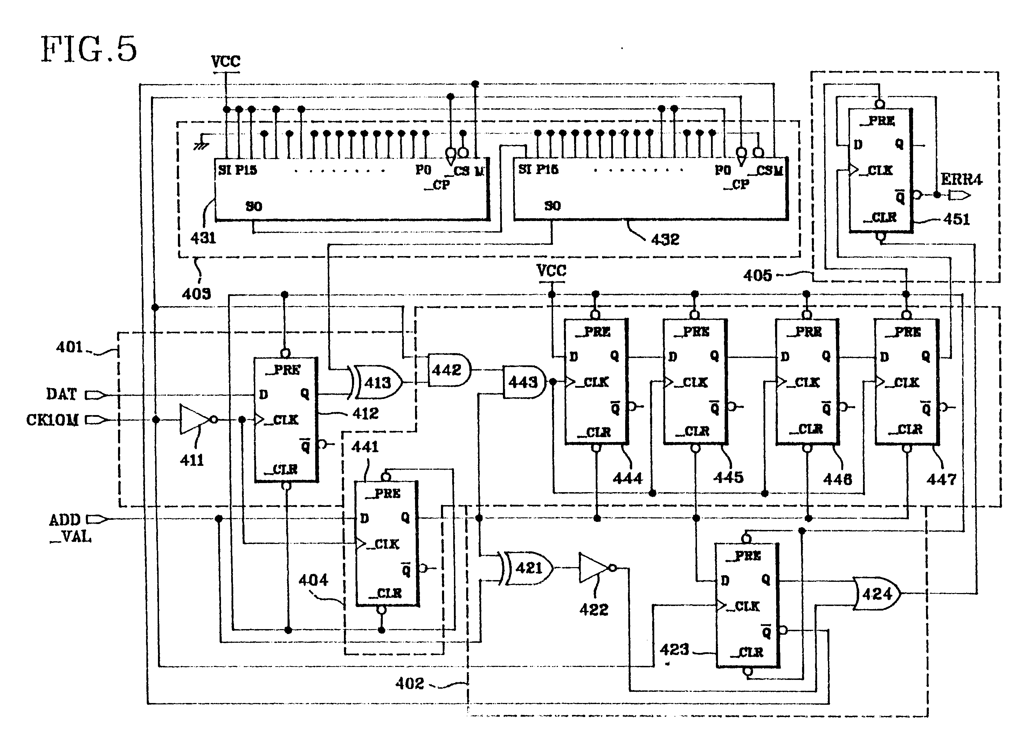

Figures 2 to 5 are detailed circuit diagrams for the first, second, third and the fourth error detectors 100, 200, 300 and 400 of the error detector section 1000 in Figure 1.

The first error detector 100 comprises a comparator 101 for comparing the externally input packet data with the internally generated header data, a controller 102 for initializing the final output stage ERR1 to logic high state during the 23-bit period of the packet header, a header data generator 103 for generating 23-bit header data of the zero packet data having continuous index 00; an error checker 104 for outputting logic high signal if the output of the comparator 101 indicates more than 4 bits of error, and an output driver 105 for driving the final output ERR1 to logic "low" if the error checker 104 outputs logic "high", judging it as an error situation, and further, for driving the final output ERR1 to logic "high" if the error checker 104 outputs logic "low".

The comparator 101 comprises D flip-flop 11, the D-input of which is connected to the data output stage DAT and the clock-input of which is connected to the main clock input CK10M through an inverter 111, and an exclusive OR gate 113 which receives one input from the Q-output of D-flip-flop 112 and the other input from the internally generated packet header for continuous index 00.

The controller 102 comprises an exclusive OR gate 121 connected at one input to the address-valid signal ADD-VAL which is logic "high" during the 23-bit period of the packet header for the zero packet data, and at the other input to the half-clock delayed address valid signal ADD-VAL from the Q-output of D flip-flop 123, an inverter 122 for inverting the output of the exclusive OR gate 121, D flip-flop 123 of which the D-input is connected to the half-clock delayed address valid signal ADD-VAL and the clock-input CLK is connected to the main clock input CK10M, and a 2-input OR gate 124 of which one input is connected to the Q-output of D flip-flop 123, and the other input to the output of the inverter 122.

The header data generator 103 comprises first and second shift registers 131 and 132, of which the clock-input is connected to the main clock input CK10M, the master reset input M is connected to the Q-output of D flip-flop 123 of the controller 102, and the data input stage consists of 16 pins which are all connected to the ground, such that the second shift register 132 serially outputs a 23-bit header (whose 23 bits are all "0") for zero packet data having continuous index 00 as shown in table 2, to one input of the exclusive OR gate 113 of the comparator 101.

The error checker 104 comprises D flip-flop 141, of which the D-input is connected to the address valid signal ADD-VAL and the clock input is connected to the main clock input CK10M through an inverter 111 such that the externally input address valid signal ADD-VAL is half-clock delayed (shifted), a 2-input AND gate 142, one input of which is connected to the main clock input CK10M, and the other to the output of the exclusive OR gate 113 of the comparator 101, and four flip-flops 144, 145, 146 and 147, the clock inputs of which are connected in common to the output of the AND gate 143 and the clear inputs -CLR of which are connected to the Q-output of D-flip-flop 141. D flip-flop 144 is connected through its D-input to the reference voltage VCC and through its Q-output to the D-input of D-flip-flop 145. Each of D flip-flops 145, 146 is connected to the Q-output of D-flip-flops 144 and 145 respectively through its D-input to the D-input of the following D flip-flop 146 and 147 respectively through its Q-output. Finally the Q-output of D flip-flop 147 is connected to the output driver 105.

The output driver 105 comprises D flip-flop 151 of which the clock-input is connected to the Q-output of D flip-flop 147 of the error checker 104 and the Q-output is fed back to the D-input. The Q-output of D flip-flop 151 is fed back to its D-input and also to data output circuit 2000 through the final output stage ERR1.

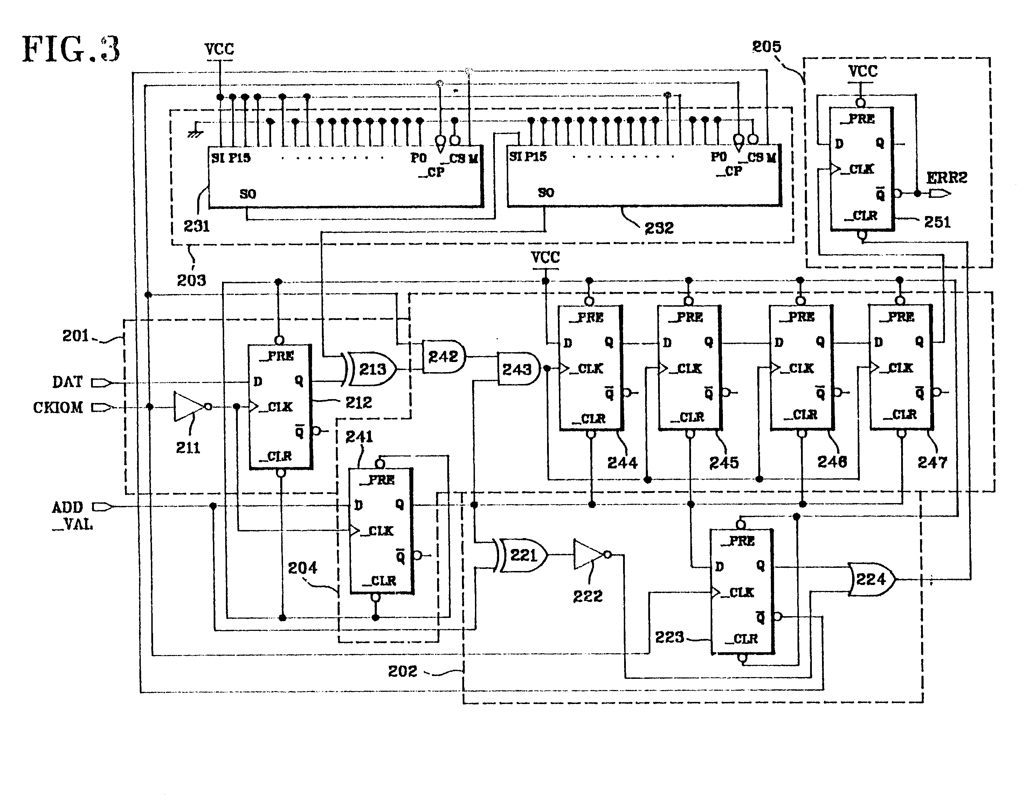

The circuits shown in Figures 3 to 5 are identical to the circuit in Figure 2 except for the header data generators 203, 303, 403 which will be explained hereunder.

Figure 3 is a detailed circuit diagram of the second error detector 200 of which the header data generator 203 consists of two shift registers 231 and 232 each having 16 data input pins, and generates the 23-bit header data (00000000000110001110101) for the zero packet data having continuous index 01 as shown in table 2.

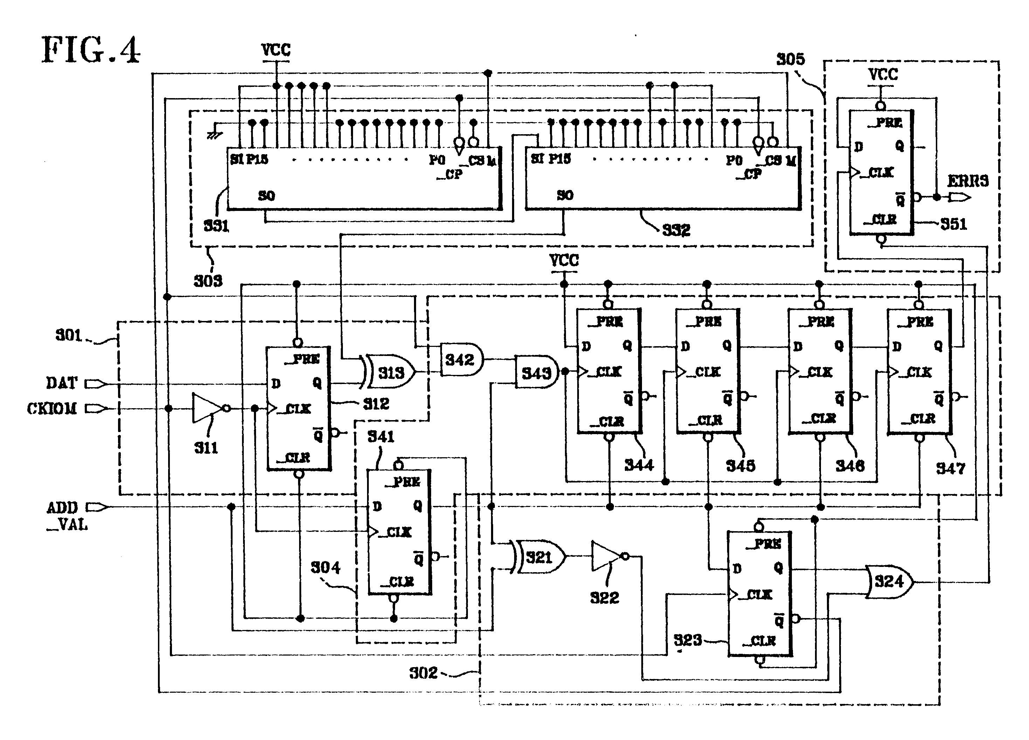

Figure 4 is a detailed circuit diagram of the third error detector 300 of which the header data generator 303 consists of two shift registers 331 and 332 each having 16 data input pins, and generates the 23-bit header data (00000000001010010011111) for the zero packet data having continuous index 11 as shown in table 2.

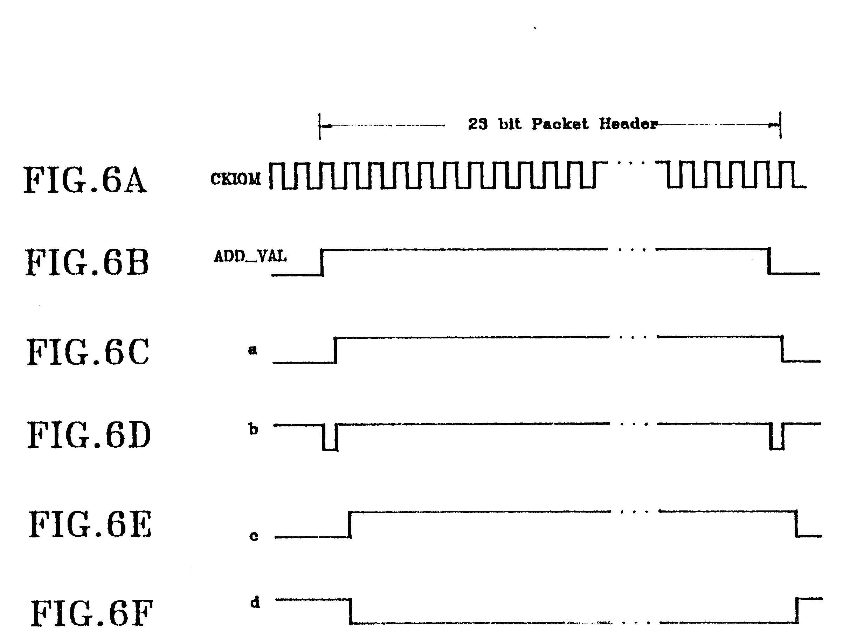

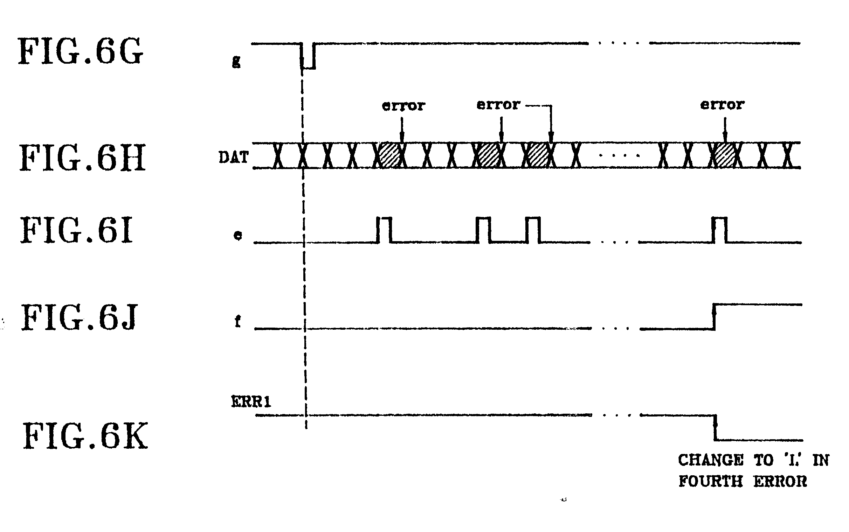

Figure 6 is a waveform diagram showing the operation of each component in Figures 2 to 5.

The operation of the present invention as described above will now be explained.

A received packet data is input to the main data input port DAT of the error detector section 1000 and a main clock CK10M (approximately 10.125 MHz) is input in synchronization with the packet data. An address valid signal ADD-VAL is input to the address valid signal input port ADD-VAL such that it is logic "high" only during the 23 bit period of the packet header out of the 751-bit period of a packet data. A logic "high" signal is input only through the WIN728 input port during the 728-bit period of the effective data of a packet data.

Each of the first, second, third and fourth error detectors 100, 200, 300 and 400 has the function of detecting zero packet data, and checking for errors in the zero packet data having the same address code but different continuous indices (00, 01, 10 and 11) respectively). The header data generator 103, 203, 303, and 403 of each error detectors are designed to output the 23-bit header data for each continuous index (00, 01, 10 and 11 respectively).

That is, the 10-bit address code and the 2-bit continuous index are Golay-encoded at the transmitting end to produce an 11-bit protection suffix. Then the 10-bit address code, the 2-bit continuous index and the 11-bit protection suffix are combined to form a 23-bit packet header.

At the receiving end, a decoder implemented by TTL-level gates is used to receive the Golay-encoded 23-bit packet header and check the number of error bits out of the 23 bits to determine whether the received packet data may be used.

For the above-described error detection and checking, the operation of the first error detector 100 of the error detector section 100 is explained hereunder, with reference to Figures 1, 2 and 6.

First, when a main clock input CK10M, having the waveform shown in Figure 6A, is input to the clock input of D flip-flip 112, after being inverted by the inverter 111 of the comparator 100, and the packet data is input to the D-input of D flip-flop 112 through the data input DAT, the packet data is half-clock delayed and output to one input port of the exclusive OR gate 113 through Q-output of D flip-flop 112.

Meanwhile, the address valid signal ADD-VAL, which is logic "high" only during the 23-bit period of the packet header is provided to one input port of the exclusive OR gate 121 of the controller 102 and to the D-input of D flip-flop 141 of the error checker 104, as shown in Figure 6B.

Since the clock-input of D flip-flop 141 receives the main clock signal after it has been inverted by the inverter 111, the address valid ADD-VAL signal in half-clock delayed as shown in Figure 6C and then output to the other input port of the exclusive OR gate 121 of the controller 102 through the Q-output of D flip-flop 141.

Meanwhihle, the exclusive OR gate by definition outputs a logic "low" if the two input signal are logic "low" at the same time or logic "high" at the same time, and outputs a logic "high" if one input signal is logic "high" and the other input signal is "low", or vice versa. Therefore, the exclusive OR gate 121 outputs a logic "high" only during the first half-clock period when the address valid signal ADD-VAL is high and during the last half-clock period when the address valid signal (ADD-VAL) is low. The output of the exclusive OR gate 121 is inverted by the inverter 122 to a waveform show in Figure 6D and is output to one input port of the OR gate 124 of the controller 102.

When the address valid signal, after being half-clock delayed by D flip-flop 141 of the error checker 104, is sent to the D-input of D flip-flop 123 of the controller 102, and the main clock signal CK10M is sent to the clock-input of D flip-flop 123, D flip-flop 123 outputs one-clock delayed address valid signal to one input port of the OR gate 124, through its Q-output and an inverted and one-clock delayed address valid signal to the master reset input M of the first and second shift registers 131, 132 of the header data generator 103, through its Q-output, as shown in Figures 6E and 6F.

The Q-output of D flip-flop 123 is input to the shift registers 131, 132 and is used as the shift input to shift the first and second shift registers 131, 132 such that the contents of the shift registers 131, 132 can be compared with the packet data during the period of the packet header.

The output of the inverter 122 as shown in Figures 6D and the Q-output of D flip-flop 123, as shown in Figure 6E, are OR-added and the result, as shown in Figure 6G, is sent to the clear input -CLR of D flip-flop 151 of the output driver 105. Thus, D flip-flop 151 is cleared for the first one clock period during which the address valid signal is logic "high" such that the final output stage ERR1 of the output driver ERR1 is initialized, and remains logic "high" until the zero packet data is compared with the pre-stored header data.

The header data generator 103 provides the 23-bit header data for continuous index 00 as shown in Figure 2 to the data inputs P0 to P15 of the two shift registers 131, 132.

When the main clock signal CK10M for the clock input -CLK changes its stage from logic "high" to logic "low" and the Q-output of D flip-flop 123 of the controller 102, used as input to the master reset input M, changes its state from logic "high" to logic "low", the header data stored at the output stage SO of the second shift register 132 is output from the least significant bit at each clock, to the exclusive OR gate 113 of the comparator 101.

The packet data is input to the other input port of the exclusive OR gate 113, after being half-clock delayed from the Q-output of D flip-flop 112 of the comparator 101.

The exclusive OR gate 113 outputs a logic "low", if the two inputs are the same. If the output of the exclusive OR gate 113 is logic "low", it indicates that the transmitted packet data is error free; and if the output of the exclusive OR gate 113 is logic "high", it indicates that the transmitted packet data has an error.

Therefore, if the output of the exclusive OR gate 113 is logic "low", the outputs of the AND gates 142, 143 of the error checker 104 at the following stage are also logic "low", and D flip-flop 144 is deactivated since it receives its clock input from the AND gate 143.

Four D flip-flops 144, 145, 146 and 147, which receive clock inputs from the AND gate 143, maintain logic "low" state since they are initialized by the half-clock delayed address valid signal from D flip-flop 141. Therefore, if the output of the AND gate 140 is logic "low", the Q-output of D flip-flop 147 remains logic "low" and is provided to the clock input of D flip-flop 151 of the output driver 105, and D flip-flop 151, which has been initialized to logic "low" by the OR gate 124 of the controller 102, maintains its latched state. Therefore, the final output stage ERR1, which is driven by the Q-output of D flip-flop 151, becomes logic "high".

If the two inputs to the exclusive OR gate 113 of the comparator 101 are different from each other, it indicates occurrence of an error bit out of the 23 bit header data. One error bit will activate only D flip-flop 144, two error bits will activate two D flip-flops 144 and 145, and three error bits will indicate three D flip-flops 144, 145 and 146.

Since each error bit occurs on a clock pulse, if there has occurred three error bits, the Q-outputs of D flip-flops 144, 145 and 146 becomes logic "high" but the Q-output of D flip-flop 147 remains logic "low", and the final output ERR1 remains logic "high".

However, if four error bits occurred, the AND gate 142 changes its output state from logic "low" to logic "high".

When the fourth error bit occurs, as shown in Figure 61, the Q-output of D flip-flop 147 becomes logic "high" as shown in Figure 6J and is sent to the clock input of the output driver 105. Then, D-flip-flop 151, which was in its latched state, is activated from logic "low" to logic "high" and drives the final output ERR1 to logic "low", as shown in Figure 6K, i.e., on the occurrence of the fourth error bit.

The number of error bits required to drive the final output ERR1 to logic "low" is decided by the number of D flip-flops connected in series with the AND gate 143 of the error checker 104. That is, if there are only three D flip-flops, occurrence of three error bits out of the 23-bit header will be regarded as an error in a zero packet. Similarly, if there are five D flip-flops, occurrence of 5 error bits or more will be regarded as an error in a zero packet. Thus, the number of error bits can be decided arbitrarily.

If the packet data being input to the first, second, third and fourth error detectors 100, 200, 300 and 400 is zero packet data having continuous index 00, the final outputs ERR2, ERR3, and ERR4 of the second, the thrid and the fourth error detectors 200, 300 and 400 becomes logic "low".

That is, since the header data generator 203 of the second error detector 200 stores the header data for continuous index 01, the header data generator 303 of the third error detector 300 for continuous index 10, and the header data generator 403 of the fourth error detector 400 for continuous index 11, and since the header data for continuous indices 00, 01, 10 and 11 are all different from one another as shown in table 2, if the header data for continuous index 00 is input to the second, the third and the fourth error detectors through the data input DAT, the second, the third and the fourth error detectors 200, 300 and 400 will judge it as the occurrence of more than 3 bits of error and drive the final output stages ERR2, ERR3 and ERR4 to logic "low".

Similarly, if a zero packet data having continuous index 01 is input, the first, third and fourth error detectors 100, 300 and 400 will drive their outputs to logic "low", and only the second error detector 200 will correctly check the error of the input zero packet data.

If a zero packet data having continuous index 10 is input, the first, second and fourth error detectors 100, 200 and 400 will drive their outputs to logic "low", and only the third error detector 300 will correctly check the error of the input zero packet data.

Further, if a zero packet data having continuous index 11 is input, the first, second and third error detectors 100, 200 and 300 will drive their outputs to logic "low", and only the fourth error detector 400 will correctly check the error of the input zero packet data.

Therefore, if errors occur in more than three bits of the zero packet input through the data input DAT, the outputs of the first, second, third and fourth error detectors 100, 200, 300 and 400 become logic "low", the outputs of the OR gates 2001, 2002, and 2003 of the data output circuit 2000 becomes logic "low" and the output of the OR gate 2003 is sent to one input of the AND gate 2004. Hence, the output of the AND gate 2004 becomes logic "low", regardless of the other input, and is sent to one input of the subsequent AND gate 2005. The output of the AND gate 2005 becomes also logic "low" regardless of the other input, and is sent to the clock input of the subsequent D flip-flop 2007.

Therefore, D flip-flop 200 is deactivated and the packet data from the data input stage DAT being input to the D-input of D flip-flop 2007 is not output. However, if errors occur in not more than three bits of the zero packet data being input through the data input stage DAT, one of the four error detectors 100, 200, 300 and 400 will output logic "high". If the packet input through data input DAT is a zero packet having continuous index 00, and if the first error detector 100 judges that the number of error bits is not more than three, the output of the first error detector 100 becomes logic "high" and therefore the output of the OR gates 2001 and 2003 of the data output circuit 2000 becomes logic "high" and is sent to the subsequent ANd gate 2004.

Since the other input to the AND gate 2004 is connected to the signal input WIN728 which is logic "high" during the 728-bits (exlcuding the header data 23 bits) effective data period, the output of the AND gate 2004 becomes logic "high" and is sent to one input of the subsequent AND gates 2005.

Meanwhile, since the other input to the AND gate 2005 is the main clock signal CK10M after being inverted by the inverter 2006, the AND gate 2005 serves as a buffer and outputs the inverted main clock signal to the clock input of D flip-flop 2007. This activates D flip-flop 2007 and then outputs through its Q-output PKTO the packet data received through its D-input.

The above-described embodiment of the present invention has the advantage of more easily detecting errors, reducing the number of required components, simplifying the circuitry, and thus achieving better cost-effectiveness by internally generating the packet header data for continuous indices 00, 01, 10 and 11 for packets having address code "0" by means of shift registers, by comparing the 23-bit header of the input packet data with the internally generated packet header data, by outputting the input packet data if the number of error bits is not more than a predetermined number, judging it as an absence of errors in the input packet data, and by prohibiting the output of the input packet data if the number of error bits is more than a predetermined number, judging it as a presence of errors in the input packet data.

## Claims

1. An error detection circuit, comprising:
comparing means (101, 201, 301, 401) for comparing an input data signal with each of a plurality of predetermined bit patterns; and
error detect signal generating means (104, 105, 204, 205, 304, 305, 404, 405) responsive to the comparing means for generating an error detect signal if each of the predermined bit patterns differ from the input data signal by more than a predetermined number of bits.

2. A circuit according to claim 1, including means to separate a header portion from a data packet,
comprising a header portion and an information portion, and gate means (2000) responsive to the error detect signal to block transfer of said information packet therethrough, wherein said input signal comprises said header portion.

3. A circuit according to claim 1 or 2, wherein the comparing means (101, 201, 301, 401) comprises a plurality of comparators (113, 213, 313, 413), operating in parallel, for comparing the input data signal with respective ones of said predetermined bit patterns.

4. A circuit according to claim 1, 2 or 3, wherein said predetermined bit patterns are generated by respective shift registers (103, 203, 303, 403) for each comparison.

5. A circuit according to any preceding claim, wherein there are four predetermined bit patterns.

6. A circuit according to claim 5, wherein the predetermined bit patterns are D2 MAC zero packet headers having respectively continuous indices of "00", "01", "10" and "11".

7. An error detection circuit for zero packet data, comprising:
an error detector which internally generates the 23-bit packet header data for continuous indices 00, 01, 10 and 11 for packets having address code "0", compares the 23-bit header of a transmitted packet data with said internally generated packet header data, judges a zero packet data to be normal if said comparison indicates occurrence of errors less than a predetermined number of bits, and judges said zero packet data to be an error if said comparison indicates occurrence of errors more than a predetermined number of bits; and
a data output circuit which allows output of a transmitted packet data if said error detector judges said packet data to be normal and prohibits output of said transmitted packet data if said error detector judges said packet data to be an error.

8. The error detection circuit for zero packet data in claim 7, wherein said error detector comprises:
a first error detector for detecting errors in a zero packet data having continuous index 00;
a second error detector for detecting errors in a zero packet data having continuous index 01;
a third error detector for detecting errors in a zero packet data having continuous index 10; and
a fourth error detector for detecting errors in a zero packet data having continuous index 11.

9. The error detection circuit for zero packet data in claim 8, wherein said first error detector comprises;:
a comparator 101 for comparing a transmitted packet data with an internally generated 23-bit packet header data for continuous index 00;
a controller 102 for initializing a final output stage ERR1 in synchronization with the start of the 23-bit header data;
a header data generator 103 for serially outputting pre-stored 23-bit header data for continuous index 00 to said comparator 101 in response to a control signal from said controller 102;
an error checker 104 for outputting an error-occurred signal if said comparison by said comparator 101 indicates that the transmitted packet header data has errors more than a predetermined number of bits; and
an output circuit 105 for outputting said error-occurred signal or the transmitted packet data to the final output stage ERR1 in response to the output of said error checker 104.

10. The error detection circuit for zero packet data in claim 8, wherein said second error detector comprises:
a comparator 201 for comparing a transmitted packet data with an internally generated 23-bit packet header data for continuous index 01;
a controller 202 for initializing a final output stage ERR2 in synchronization with the start of the 23-bit header data;
a header data generator 203 for serially outputting pre-stored 23-bit header data for continuous index 01 to said comparator 201 in response to a control signal from said controller 202;
an error checker 204 for outputting an error-occurred signal if said comparison by said comaprator 201 indicates that the transmitted packet header data has errors more than a predetermined number of bits; and
an output circuit 205 for outputting said error-occurred signal or the transmitted packet data to the final output stage ERR2 in response to the output of said error checker 204.

11. The error detection circuit for zero packet data in claim 8, wherein said third error detector comprises:
a comparator 301 for comparing a transmitted packet data with an internally generated 23-bit packet header data for continuous index 10;
a controller 302 for initializing the final output stage ERR3 in synchronization with the start of the 23-bit header data;
a header data generator 303 for serially outputting pre-stored 23-bit header data for continuous index 10 to said comparator 301 in response to a control signal from said controller 302;
an error checker 304 for outputting an error-occurred signal if said comparison by said comparator 301 indicates that the transmitted packet header data has errors more than a predetermined number of bits; and an output circuit 305 for outputting said error-occurred signal or the transmitted packet data to the final output stage ERR3 in response to the output of said error checker 304.

12. The error detection circuit for zero packet data in claim 8, wherein said fourth error detector comprises:
a comparator 401 for comparing a transmitted packet data with an internally generated 23-bit packet header data for continuous index 11;
a controller 402 for initialing a final output stage ERR4 in synchronization with the start of the 23-bit header data;
a header data generator 403 for serially outputting pre-stored 23-bit header data for continuous index 11 to said comparator 401 in response to a control signal from said controller 402;
an error checker 404 for outputting an error-occurred signal if said comparison by said comparator 401 indicates that the transmitted packet header data has errors more than a predetermined number of bits; and
an output circuit 405 for outputting said error-occurred signal or the transmitted packet data to the final output stage ERR4 in response to the output of said error checker 404.

13. The error detection circuit for zero packet data in claim 9, wherein said comparator 101 comprises:
D flip-flop 112 of which the D-input is connected to the packet data transmitted from the transmitting end, and the clock-input to the main clock signal CK10M inverted by the inverter 111; and
an exclusive OR gate 113 of which one input is connected to the Q-output of said D flip-flop 112, and the other input to the packet header data for continuous index 00 being internally generated.

14. The error detection circuit for zero packet data in claim 9, wherein said controller 102 comprises:
an exclusive OR gate 121 of which one input is connected to said address valid signal ADD-VAL which is logic "high" only during the 23 bit packet data header period, and the other input to the half-clock delayed address valid signal ADD-VAL;
an inverter 122 for inverting the output of said exclusive OR gate 121;
D flip-flop 123 of which the clock-input is connected to the main clock signal CK10M, and the D-input to the a half clock delayed address valid signal ADD-VAL; and
2-input OR gate 124 of which one input is connected to the Q-output of the said D flip-flop 123, and the other input to the output of said inverter 122.

15. The error detection circuit for zero packet data in claim 9, wherein said header data generator 103 comprises:
first and second shift registers 131 and 132 of which the clock inputs are connected to said main clock signal CK10M, the master reset inputs M are connected to the Q-output of the D flip-flop 123 of said controller 102, and the number of data input ports is sixteen each.

16. The error detection circuit for zero packet data in claim 9, wherein said error checker 104 comprises:
D flip-flop 141 of which the D-input is connected to said address valid signal ADD-VAL and the clock-input is connected to said main clock signal CK10M through an inverter 111;
two-input AND gate 152 of which one input is connected to said main clock signal CK10M and the other input is connected to the output of the exclusive OR gate 113 of said comparator 101;
two-input AND gate 143 of which one input is connected to said AND gate 142 and the other input is connected to the Q-output of said D flip-flop 141; and
four D flip-flops 144, 145, 146 and 147 of which the D-inputs are connected to a reference voltage VCC, the clock-inputs are connected to the output of the AND gate 143, the clear-inputs -CLR are connected to the Q-output of said D flip-flop 141, and which are interconnected in such a manner that the Q-output of the foregoing D flip-flop is connected to the D-input of the subsequent D flip-flop.
